# EUROPÄISCHE PATENTSCHRIFT

(11) **EP 3 373 421 B1**
(45) Veröffentlichungstag und Bekanntmachung des Hinweises auf die Patenterteilung: **20.11.2019**
(21) Anmeldenummer: 17160139.6
(22) Anmeldetag: 09.03.2017
(51) Int. Cl.: H02K 5/04, H02K 5/02, H02K 5/20, H02K 15/14, H02K 21/14, H02K 5/15

(54) **GEHÄUSEEINHEIT FÜR EINE ELEKTRISCHE MASCHINE**
HOUSING UNIT FOR AN ELECTRIC MACHINE
UNITÉ DE BOÎTIER POUR UNE MACHINE ÉLECTRIQUE

(43) Veröffentlichungstag der Anmeldung: 12.09.2018
(73) Patentinhaber: Siemens Aktiengesellschaft, 80333 München (DE)
(72) Erfinder: Huter, Eric, 97616 Bad Neustadt a. d. Saale (DE); Seufert, Reiner, 97616 Salz (DE); Vollmer, Rolf, 36129 Gersfeld (DE)

(56) Entgegenhaltungen:
- EP-A1- 0 314 607
- DE-A1- 1 763 613
- US-A1- 2008 136 277
- US-A1- 2015 035 392

## Beschreibung

Die Erfindung betrifft eine Gehäuseeinheit für eine elektrische Maschine, insbesondere für einen PM-Servomotor, mit einem ersten Lagerschild, mit einem Zwischenflansch und mit einem ersten Statorblechpaket. Die Erfindung betrifft weiter eine elektrische Maschine mit einer derartigen Gehäuseeinheit sowie ein Verfahren zur Herstellung einer derartigen Gehäuseeinheit.

Derartige Gehäuseeinheiten werden beispielsweise für PM-Servomotoren verwendet. Bei speziellen Anwendungsfällen ist es erforderlich, dass das Gehäuse der elektrischen Maschine aus Edelstahl bestehen soll oder muss. Derartige Edelstahlgehäuse haben die negative Eigenschaft, dass sie eine schlechte Thermoabfuhr besitzen, so dass die zulässige Leistung der elektrischen Maschine, meist des Motors, entsprechend reduziert werden muss oder der Motor entsprechend größer gebaut werden muss, als vergleichbare Motoren ohne Edelstahlgehäuse.

Die DE 17 63 613 A1 betrifft ein Verfahren zur Montage von durch eine Vorrichtung in der zu montierenden Lage gehaltenen Lagerschilden von rotierenden elektrischen Maschinen mittels eines Hochgeschwindigkeits-Umformverfahrens.

Aus der US 2015/035392 A1 ist ein Verfahren zum Herstellen eines nichtleitenden, flüssigkeitsgekühlten Rückwärmetauschers aus Eisen zur Aufnahme einer leitfähigen Kühlflüssigkeit offenbart. Dieses Verfahren kann das Bilden von Materialschichten durch additive Fertigung umfassen, um Kanäle zum Transportieren von Kühlflüssigkeit zu schaffen.

Die EP 0 314 607 A1 zeigt einen Elektromotor, der aus einem diesen dicht umschließenden Gehäuse aus einem Blechmantel aus nichtrostendem Stahl, einem Stator, einer aus dem Gehäuse herausgeführten Welle, sowie zwei zu beiden Seiten des Stators angeordneten Zentrierstücken besteht, die an den Stirnseiten des Stators anliegen und in denen die Welle gelagert ist.

Die US 2008/136277 A1 betrifft eine Motorpumpeneinheit mit einem nasslaufenden Elektromotor und eine von dem Elektromotor angetriebenen Hydraulikpumpe. Der Elektromotor weist einen Rotor und einen ihn umgebenden Statorblechkern auf. Der Elektromotor ist an einem Ende durch eine Verbindungsabdeckung und am entgegengesetzten Ende durch eine Endkappe abgeschlossen.

Der Erfindung liegt die Aufgabe zu Grunde, ein dünnwandiges Edelstahlgehäuse für eine elektrische Maschine auf kostengünstige und einfache Weise herzustellen.

Diese Aufgabe wird bei Gehäuseeinheit der eingangs genannten Art dadurch gelöst, dass das erste Lagerschild, das Statorblechpaket und der Zwischenflansch eine gemeinsame Edelstahlbeschichtung aufweisen, die mittels eines generativen Fertigungsverfahrens erzeugt ist, wobei die Gehäuseeinheit aus dem ersten Lagerschild, dem Statorblechpaket, dem Zwischenflansch und der gemeinsamen Edelstahlbeschichtung gebildet wird.

Diese Aufgabe wird weiter durch eine elektrische Maschine mit einer derartigen Gehäuseeinheit gemäß Anspruch 8 gelöst.

Der Erfindung liegt die Erkenntnis zugrunde, das Gehäuse bzw. die Gehäuseeinheit für die elektrische Maschine nicht vollständig aus Edelstahl zu fertigen, sondern lediglich die äußere Gehäuseschicht mit Edelstahl zu beschichten. Diese Edelstahlbeschichtung erfolgt mittels eines generativen Fertigungsverfahrens, beispielsweise mit dem MPA = Metal Powder Application Technic. Dazu werden Edelstahlpartikel im Metallstoffschluss mit der Gehäuseeinheit verbunden, also quasi geschweißt. Als kleinste Einheit für das Gehäuse werden hierbei das erste Lagerschild, das Statorblechpaket und der Zwischenflansch mit einer gemeinsamen Edelstahlbeschichtung versehen.

Somit kann sowohl das erste Lagerschild, in der Regel das AS-Lagerschild vom Grundstoff aus Aluminium bzw. aus Eisenmetall bestehen, ebenso der Zwischenflansch. Das Statorblech, welches häufig auch als Jochpaket bezeichnet wird, wird bei der Fertigung in einem ersten Schritt mit dem Lagerschild und dem Zwischenflansch zusammengefügt und anschließend dann eine Edelstahlbeschichtung dünn aufgetragen, beispielsweise ca. 1 bis 3 mm. Hierdurch kommt es zu einem metallischen Stoffschluss mit einer geringen Edelstahlschichtdicke, welche jedoch die gleichen Vorteile wie ein vollständiges Edelstahlgehäuseteil aufweist, gleichzeitig wird eine deutlich verbesserte Entwärmung sichergestellt. Durch die Edelstahlbeschichtung können Dichtungselemente und Schrauben für eine Materialverbindung eingespart werden, ebenso wird bei der dünnwandigen Beschichtung mit Edelstahl dieses relativ kostenintensive Edelstahlmaterial entsprechend sparsam verwendet und somit kommt es zu einer Kosteneinsparung.

Die Beschichtung im generativen Fertigungsverfahren gewährleistet sowohl einen metallischen Stoffschluss auch bei höchsten Bindungskräften. Zudem ist durch das generative Fertigungsverfahren eine sehr hohe Flexibilität in Bezug auf Baulänge und Durchmesser für die Gehäuseeinheit bzw. für die elektrische Maschine gegeben.

Vorteilhafte Ausgestaltungsformen sind in den Unteransprüchen enthalten.

Ein geeignetes Verfahren zur Edelstahlbeschichtung der Gehäuseeinheit besteht in einem generativen Fertigungsverfahren, z.B. dem sogenannten MPA-Verfahren (MPA = Metal Powder Application Technique). Dabei wird die Edelstahlbeschichtung der Gehäuseeinheit auf einfach Weise dadurch erzeugt wird, dass Edelstahlpartikel im Metallstoffschluss mit dem ersten Lagerschild, dem Zwischenflansch und dem ersten Statorblechpaket verbunden werden.

Eine einfache Bestückung der Gehäuseeinheit zu einer kompletten elektrischen Maschine kann in der Weise sichergestellt werden, dass die Gehäuseeinheit zur Aufnahme eines Rotorblechpakets mit Magneten und mit Lagern ausgebildet ist, wobei das Rotorblechpaket zum Zusammenwirken mit einer insbesondere aus Edelstahl gefertigten Welle ausgebildet ist.

Ein komplettes Gehäuse einer edelstahlbeschichteten elektrischen Maschine entsteht in einfacher Weise dadurch, dass die Gehäuseeinheit zur Kopplung mit einem mit einer zweiten Edelstahlbeschichtung beschichteten zweiten Lagerschild vorgesehen ist.

Mit Hilfe des generativen Fertigungsverfahrens kann die Gehäuseeinheit gezielt mit insbesondere dünnwandigen und filigranen Kühlkanälen dadurch versehen werden, dass die Gehäuseeinheit im Bereich der erste und/oder der zweite Edelstahlbeschichtung Kühlkanäle zur weiteren Verbesserung einer Wärmeabfuhr aufweist, wobei die Kühlkanäle mittels des generativen Fertigungsverfahrens erzeugt werden.

Eine komplette elektrische Maschine kann auf einfache Weise dadurch geschaffen werden, dass die elektrische Maschine eine Rotoreinheit bestehend aus Rotor, Rotorblechpaket, Magneten und Lagern ausweist.

Ein vollständiges Edelstahlgehäuse für eine elektrische Maschine wird dadurch sichergestellt, dass die elektrische Maschine ein aus der Gehäuseeinheit und aus dem zweiten Lagerschild gebildetes Edelstahlgehäuse aufweist.

Die Aufgabe wird weiter durch ein Verfahren zur Herstellung einer elektrischen Maschine gemäß Anspruch 10 gelöst. Bei dem erfindungsgemäßen Verfahren zur Herstellung einer elektrischen Maschine werden in einem ersten Fertigungsschritt ein erstes Lagerschild, ein äußeres Blechpaket und ein Zwischenflansch zusammengefügt, in einem zweiten Fertigungsschritt werden das erste Lagerschild, das äußere Blechpaket und der Zwischenflansch mit einer Edelstahlbeschichtung beschichtet, in dem das erste Lagerschild, das äußere Blechpaket und der Zwischenflansch mittels eines generativen Fertigungsverfahrens durch Edelstahlpartikel miteinander zu einer Gehäuseeinheit verbunden werden.

Der Herstellungsprozess der elektrischen Maschine sieht weiter vor, dass in einem dritten Fertigungsschritt ein bewickeltes Statorblechpaket in die im zweiten Fertigungsschritt erzeugte Gehäuseeinheit eingefügt wird.

In einem vierten Fertigungsschritt wird dann eine Rotoreinheit bestehend aus Rotor, Lagern, Rotorblechpaket und Magneten in die im dritten Fertigungsschritt erzeugte Motoreinheit eingefügt wird.

Als Abschluss des Herstellungsverfahrens der elektrischen Maschine wird einem fünften Fertigungsschritt ein zweites Lagerschild an der Motoreinheit befestigt.

Optimiert wird die fertige elektrische Maschine dadurch, dass die Gehäuseeinheit und/oder die Motoreinheit durch zerspanende Bearbeitung und/oder durch Elektropolierverfahren geglättet werden.

Im Folgenden wird die Erfindung anhand der in den Figuren dargestellten Ausführungsbeispiele näher beschrieben und erläutert.
Es zeigen:
- FIG 1: einen Schnitt durch eine elektrische Maschine mit einem Gehäuse mit einer Edelstahlbeschichtung,
- FIG 2: einen Schnitt durch Grundkomponenten aus einem Lagerschild, einem Zwischenflansch und einem Statorblechpaket als Vorbereitung für eine zu beschichtende Gehäuseeinheit einer elektrischen Maschine,
- FIG 3: einen Schnitt durch eine Gehäuseeinheit mit Edelstahlbeschichtung sowie ein bewickeltes Sternpaket und
- FIG 4: eine bestückte Gehäuseeinheit als Statoreinheit sowie die zugehörige Rotoreinheit.

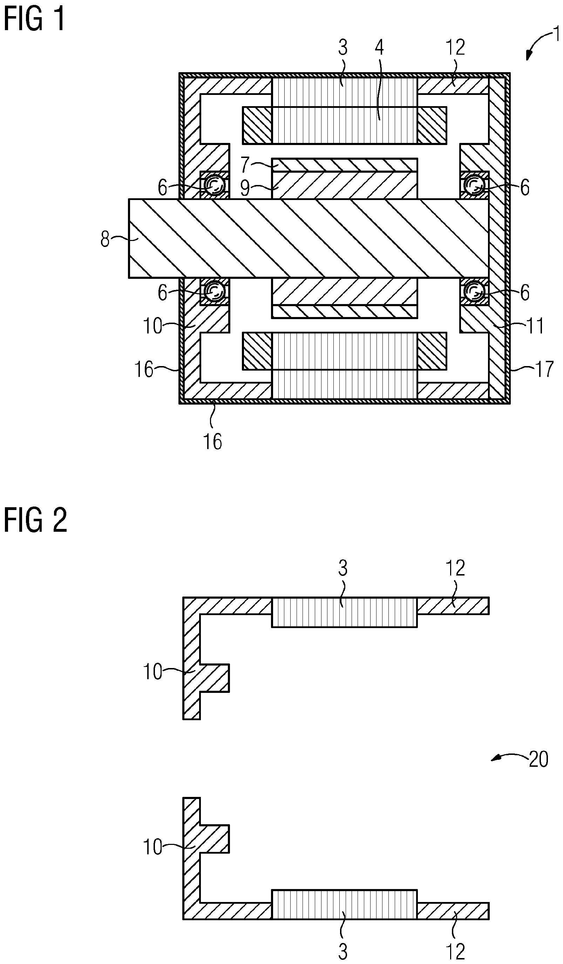

FIG 1 zeigt eine elektrische Maschine 1 in Schnitt mit einem mit Edelstahlbeschichtungen 16, 17 versehenen Gehäuse. Die elektrische Maschine 1 besteht im Wesentlichen aus zwei Gehäuseeinheiten. Die Hauptgehäuseeinheit, deren Herstellungsverfahren im Zusammenhang mit den Figuren 2 bis 4 ausführlich erläutert wird, besteht im Wesentlichen aus einem ersten Lagerschild 10, einem Statorblechpaket 3 sowie einem Zwischenflansch 12. Diese Gehäuseeinheit bildet somit eine Statoreinheit, eine gemeinsame Edelstahlbeschichtung in Form der ersten Edelstahlbeschichtung 16 aufweist. Die zweite Gehäuseeinheit besteht im Wesentlichen aus einem zweiten Lagerschild 11, die ebenfalls eine zweite Edelstahlbeschichtung 17 aufweist. Die Besonderheit des in FIG 1 dargestellten Gehäuses bzw. der elektrischen Maschine 1 ist, dass das gesamte Gehäuse eine Edelstahlbeschichtung 16, 17 aufweist, die mittels eines generativen Fertigungsverfahrens erzeugt ist. Diese Edelstahlbeschichtungen 16, 17 können dünn aufgetragen werden, beispielsweise mit einer Dicke von 1 bis 3 mm. Durch den metallischen Stoffschluss zwischen der Edelstahlbeschichtung und dem darunterliegenden Aluminium- oder Eisenmetall bzw. dem Elektroblech des Statorblechpaketes 3 ist einem Vergleich zu einem kompletten Gehäuse aus Edelstahl deutlich verbesserte Entwärmung des Gehäuses und der elektrischen Maschine 1 gegeben. Darüber hinaus kann durch die dünnwandige Beschichtung durch Edelstahl Material eingespart werden. Die Beschichtung im generativen Fertigungsverfahren gewährleistet einen metallischen Stoffschluss mit höchsten Bindungskräften.

Die weiteren Komponenten der in FIG 1 dargestellten elektrischen Maschine 1 sind im Wesentlichen konventioneller Art. So weist die elektrische Maschine 1 ein bewickeltes Sternblechpaket 4 auf. Darüber hinaus sind Lager 6 vorgesehen, zur Lagerung der aus dem Welle 8, dem Rotorblechpaket sowie den Magneten 7 zugeordneten Rotoreinheit 15.

FIG 2 zeigt einen Schnitt durch Grundkomponenten der in FIG 1 dargestellten elektrischen Maschine 1. Diese Grundkomponenten bestehen aus einem Lagerschild 10, einem Zwischenflansch 12 sowie einem Statorbleckpaket 3 und einem Lagerschild. Diese werden in einem ersten Fertigungsschritt 20 entsprechend der in FIG 2 gezeigten Art und Weise zusammengefügt. Dabei bestehen in der Regel das erste Lagerschild sowie der Zwischenflansch 12 aus Aluminium oder aus Eisenmetall, während das Statorblechpaket aus Elektroblech besteht.

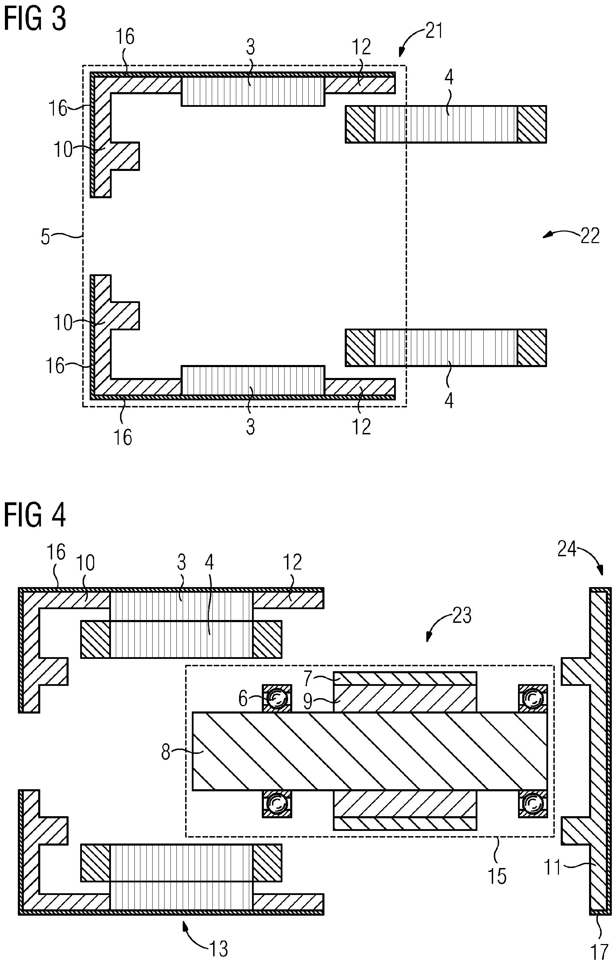

FIG 3 zeigt einen Schnitt durch eine Gehäuseeinheit 5 mit Edelstahlbeschichtung 16 sowie ein Sternblechpaket 4, dass im Rahmen eines dritten Fertigungsschrittes 22 in die Gehäuseeinheit 5 des Sternpaketes eingefügt wird. Bei dem erfindungsgemäßen Verfahren besteht der zweite Fertigungsschritt darin, dass die im ersten Fertigungsschritt zusammengefügten Grundkomponenten aus einem ersten Lagerschild, Zwischenflansch sowie Statorblechpaket (Jochpaket) mit einer gemeinsamen Edelstahlbeschichtung versehen werden.

FIG 4 zeigt auf der linken Seite die im dritten Fertigungsschritt 22 entstandene Statoreinheit 14, die sowohl die Edelstahlbeschichtung 16, als auch das bewickelte Sternpaket 4 aufweist. Auf der rechten Seite der FIG 4 ist die Rotoreinheit 15 gezeigt, die im Wesentlichen aus den Lagern 6, der Welle 8, dem Magnet 7 sowie dem Rotorblechpaket 9 besteht.

Darüber hinaus ist in FIG 4 das zweite Lagerschild 11 dargestellt, dass die Edelstahlbeschichtung 17 aufweist, wie dies bereits im Zusammenhang mit FIG 1 gezeigt ist.

FIG 4 veranschaulicht, dass in einem vierten Fertigungsschritt 23 die Rotoreinheit in die Statoreinheit 14 eingeführt wird und der Motor bzw. die elektrische Maschine 1 durch Aufsetzen des zweiten Lagerschilds 11 entsprechend komplettiert wird.

Die Vorteile des in den Figuren 1 bis 4 dargestellten Motors sind, insbesondere die Vermeidung axialer Verbindungsstellen, in denen sonst Dichtungen eingebaut werden müssten. Hierdurch wird auch zusätzlich die axiale Wärmeleitung verbessert. Insgesamt können Standardbauteile verwendet werden, die lediglich edelstahlbeschichtet werden, so dass zusätzliche Bauteile und zusätzliche Kosten vermieden durch den generativen Prozess für die Edelstahlbeschichtung werden kraftschlüssige Verbindungen hergestellt, so dass z.B. auf zusätzliche Schraubverbindungen verzichtet werden kann. Darüber hinaus ermöglicht die generative Herstellung eine Flexibilität hinsichtlich Baulänge und Durchmesser, ohne weitere Werkzeugkosten zu verursachen. Somit entfallen auch Lagerkosten für unterschiedliche Gehäuseabmessungen. Darüber hinaus besteht durch die Edelstahlbeschichtung die Möglichkeit, sehr flexibel auf Kundenanforderungen und unterschiedliche Umweltbedingungen durch Abänderung des Edelstahls zu reagieren.

Zusammenfassend betrifft die Erfindung somit eine Gehäuseeinheit 5 für eine elektrische Maschine 1, insbesondere für einen PM-Servomotor, mit einem ersten Lagerschild 10, mit einem Zwischenflansch 12 und mit einem ersten Statorblechpaket 3. Ein dünnwandiges Edelstahlgehäuse der elektrischen Maschine kann auf kostengünstige und einfache Weise dadurch erzielt werden, dass das erste Lagerschild 10, das Statorblechpaket 3 und der Zwischenflansch 12 eine gemeinsame Edelstahlbeschichtung 16 aufweisen, die mittels eines generativen Fertigungsverfahrens erzeugt ist, wobei die Gehäuseeinheit 5 aus dem ersten Lagerschild 10, dem Statorblechpaket 3, dem Zwischenflansch 12 und der gemeinsamen Edelstahlbeschichtung 16 gebildet wird.

## Patentansprüche

1. Gehäuseeinheit (5) für eine elektrische Maschine (1), insbesondere für einen PM-Servomotor, mit einem ersten Lagerschild (10), mit einem Zwischenflansch (12) und mit einem ersten Statorblechpaket (3),
**dadurch gekennzeichnet,**
**dass** das erste Lagerschild (10), das Statorblechpaket (3) und der Zwischenflansch (12) eine gemeinsame Edelstahlbeschichtung (16) aufweisen, die mittels eines generativen Fertigungsverfahrens erzeugt ist, wobei die Gehäuseeinheit (5) aus dem ersten Lagerschild (10), dem Statorblechpaket (3), dem Zwischenflansch (12) und der gemeinsamen Edelstahlbeschichtung (16) gebildet wird.

2. Gehäuseeinheit nach Anspruch 1,
wobei das die Edelstahlbeschichtung (16) der Gehäuseeinheit (5) dadurch erzeugt wird, dass Edelstahlpartikel im Metallstoffschluss mit dem ersten Lagerschild (10), dem Zwischenflansch (12) und dem ersten Statorblechpaket (3) verbunden werden.

3. Gehäuseeinheit nach einem der Ansprüche 1 oder 2,
wobei die Gehäuseeinheit (5) zur Aufnahme eines Rotorblechpakets (9) mit Magneten (7) und mit Lagern (6) ausgebildet ist, wobei das Rotorblechpaket (9) zum Zusammenwirken mit einer insbesondere aus Edelstahl gefertigten Welle (8) ausgebildet ist.

4. Gehäuseeinheit nach einem der Ansprüche 1 oder 2,
wobei die Gehäuseeinheit (5) zur Aufnahme einer Rotoreinheit (15) mit einer Welle (8) aus Edelstahl, einem Blechpaket (9) mit Magneten (7) und mit Lagern (6) ausgebildet ist.

5. Gehäuseeinheit nach einem der vorhergehenden Ansprüche,
wobei die Gehäuseeinheit zur Kopplung mit einem mit einer zweiten Edelstahlbeschichtung (17) beschichteten zweiten Lagerschild (11) vorgesehen ist.

6. Gehäuseeinheit nach einem der vorhergehenden Ansprüche,
wobei die Gehäuseeinheit (5) im Bereich der ersten (16) und/oder der zweiten (17) Edelstahlbeschichtung Kühlkanäle zur weiteren Verbesserung einer Wärmeabfuhr aufweist, wobei die Kühlkanäle mittels des generativen Fertigungsverfahrens erzeugt werden.

7. Elektrische Maschine (1) mit einer Gehäuseeinheit (5) nach einem der Ansprüche 1 bis 6.

8. Elektrische Maschine nach Anspruch 7,
wobei die elektrische Maschine (1) eine Rotoreinheit (15) bestehend aus Welle (8), Rotorblechpaket (9), Magneten (9) und Lagern (6) ausweist.

9. Elektrische Maschine nach einem der Ansprüche 1 bis 8,
wobei die elektrische Maschine (1) ein aus der Gehäuseeinheit (5 nach einem der Ansprüche 1 bis 3 und aus dem zweiten Lagerschild (10) gebildetes Edelstahlgehäuse aufweist.

10. Verfahren zur Herstellung einer elektrischen Maschine (1), insbesondere einer elektrischen Maschine nach einem der Ansprüche 7 bis 9, bei dem in einem ersten Fertigungsschritt (20) ein erstes Lagerschild (10), ein äußeres Blechpaket (5) und ein Zwischenflansch (12) zusammengefügt werden, bei dem in einem zweiten Fertigungsschritt (21) das erste Lagerschild (10), das äußere Blechpaket (5) und der Zwischenflansch (12) mit einer Edelstahlbeschichtung (16) beschichtet werden, in dem das erste Lagerschild (10), das äußere Blechpaket (5) und der Zwischenflansch (12) mittels eines generativen Fertigungsverfahrens durch Edelstahlpartikel miteinander zu einer Gehäuseeinheit (5) verbunden werden.

11. Verfahren nach Anspruch 8,
wobei in einem dritten Fertigungsschritt (22) ein bewickeltes Statorblechpaket (9) in die im zweiten Fertigungsschritt (21) erzeugte Gehäuseeinheit (5) eingefügt wird.

12. Verfahren nach einem der Ansprüche 10 oder 11,
wobei in einem vierten Fertigungsschritt (23) eine Rotoreinheit (15) bestehend aus Welle (8), Lagern (6), Rotorblechpaket (9) und Magneten (7) in die im dritten Fertigungsschritt (22) erzeugte Motoreinheit (13) eingefügt wird.

13. Verfahren nach einem der Ansprüche 10 bis 12,
wobei in einem fünften Fertigungsschritt (23) ein zweites Lagerschild (11) an der Motoreinheit (13) befestigt wird.

14. Verfahren nach einem der Ansprüche 10 bis 13,
wobei die Gehäuseeinheit (5) und/oder die Motoreinheit (13) durch zerspanende Bearbeitung und/oder durch Elektropolierverfahren geglättet werden.

15. Verfahren nach einem der Ansprüche 11 bis 14,
wobei in die Gehäuseeinheit (5) im Bereich der ersten (16) und/oder der zweiten (17) Edelstahlbeschichtung Kühlkanäle zur weiteren Verbesserung einer Wärmeabfuhr mittels des generativen Fertigungsverfahrens erzeugt werden.

## Claims

1. Housing unit (5) for an electric machine (1), in particular for a PM servomotor, with a first bearing shield (10), with an intermediate flange (12) and with a first stator laminated core (3),
**characterised in that**
the first bearing shield (10), the stator laminated core (3) and the intermediate flange (12) have a shared stainless steel coating (16), which is generated by means of an additive manufacturing method, wherein the housing unit (5) is formed from the first bearing shield (10), the stator laminated core (3), the intermediate flange (12) and the shared stainless steel coating (16).

2. Housing unit according to claim 1,
wherein the stainless steel coating (16) of the housing unit (5) is generated by stainless steel particles in the metal adhesive bond being bonded to the first bearing shield (10), the intermediate flange (12) and the first stator laminated core (3).

3. Housing unit according to one of claims 1 or 2,
wherein the housing unit (5) for receiving a rotor laminated core (9) has magnets (7) and bearings (6), wherein the rotor laminated core (9) is embodied to interact with a shaft (8) manufactured in particular from stainless steel.

4. Housing unit according to one of claims 1 or 2,
wherein the housing unit (5) for receiving a rotor unit (15) is embodied with a shaft (8) made from stainless steel, a laminated core (9) with magnets (7) and with bearings (6).

5. Housing unit according to one of the preceding claims,
wherein the housing unit is provided for coupling with a second bearing shield (11) coated with a second stainless steel coating (17).

6. Housing unit according to one of the preceding claims,
wherein in the region of the first (16) and/or second (17) stainless steel coating, the housing unit (5) has cooling ducts for further improving a heat discharge, wherein the cooling ducts are generated by means of the additive manufacturing method.

7. Electric machine (1) having a housing unit (5) according to one of claims 1 to 6.

8. Electric machine according to claim 7,
wherein the electric machine (1) has a rotor unit (15), consisting of shaft (8), rotor laminated core (9), magnets (9) and bearings (6).

9. Electric machine according to one of claims 1 to 8,
wherein the electric machine (1) has a stainless steel housing formed from the housing unit (5) according to one of claims 1 to 3 and from the second bearing shield (10).

10. Method for producing an electric machine (1), in particular an electric machine according to one of claims 7 to 9, in which a first bearing shield (10), an outer laminated core (5) and an intermediate flange (12) are joined together in a first manufacturing step (20), in which in a second manufacturing step (21) the first bearing shield (10), the outer laminated core (5) and the intermediate flange (12) are coated with a stainless steel coating (16), in which the first bearing shield (10), the outer laminated core (5) and the intermediate flange (12) are bonded to one another, by means of an additive manufacturing method using stainless steel particles, to form a housing unit (5).

11. Method according to claim 8,
wherein in a third manufacturing step (22), a wound stator laminated core (9) is inserted into the housing unit (5) generated in the second manufacturing step (21).

12. Method according to one of claims 10 or 11,
wherein in a fourth manufacturing step (23), a rotor unit (15) consisting of shaft (8), bearings (6), rotor laminated core (9) and magnets (7) are inserted into the motor unit (13) generated in the third manufacturing step (22).

13. Method according to one of claims 10 to 12,
wherein in a fifth manufacturing step (23), a second bearing shield (11) is fastened to the motor unit (13).

14. Method according to one of claims 10 to 13,
wherein the housing unit (5) and/or the motor unit (13) are smoothed by means of a metal cutting process and/or by electropolishing methods.

15. Method according to one of claims 11 to 14,
wherein, by means of the additive manufacturing method, cooling ducts for further improving a heat discharge are generated in the housing unit (5) in the region of the first (16) and/or second (17) stainless steel coating.

## Revendications

1. Unité (5) d'enveloppe d'une machine (1) électrique, notamment d'un servomoteur PM, comprenant un premier flasque (10), une bride (12) intermédiaire et un premier paquet (3) de tôles statoriques,
**caractérisée**
**en ce que** le premier flasque (10), le paquet (3) de tôles statoriques et la bride (12) intermédiaire ont un revêtement commun en acier fin, qui est produit au moyen d'un procédé de fabrication génératif, l'unité (5 ) d'enveloppe étant formée du premier flasque (10), du paquet (3 ) de tôles statoriques, de la bride (12) intermédiaire et du revêtement (16) commun en acier fin.

2. Unité d'enveloppe suivant la revendication 1,
dans laquelle le revêtement (16 ) en acier fin de l'unité (5) d'enveloppe est produit en reliant des particules d'acier fin suivant une coopération de matière métallique au premier flasque (10), à la bride (12) intermédiaire et au paquet (3 ) de tôles statoriques.

3. Unité d'enveloppe suivant l'une de revendications 1 ou 2,
dans laquelle l'unité (5) d'enveloppe est constituée pour recevoir un paquet (9) de tôles rotoriques ayant des aimants (7) et des paliers (6), le paquet (9) de tôles rotoriques étant constitué pour coopérer avec un arbre (8), fabriqué notamment en acier fin.

4. Unité d'enveloppe suivant l'une des revendications 1 ou 2,
dans laquelle l'unité (5) d'enveloppe est constituée pour recevoir une unité (15) rotorique ayant un arbre (8) en acier fin, un paquet (9) de tôles ayant des aimants (7) et des paliers (6).

5. Unité d'enveloppe suivant l'une des revendications précédentes,
dans laquelle l'unité d'enveloppe est prévue pour l'accouplement à un deuxième flasque (11), revêtu d'un deuxième revêtement (17) en acier fin.

6. Unité d'enveloppe suivant l'une des revendications précédentes, dans laquelle l'unité (5 ) d'enveloppe a, dans la partie du premier (16) et/ou du deuxième (17) revêtement en acier fin, des conduits de refroidissement pour améliorer encore l'évacuation de la chaleur, les conduits de refroidissement étant produits au moyen du procédé de fabrication génératif.

7. Machine (1) électrique ayant une unité (5) d'enveloppe suivant l'une des revendications 1 à 6.

8. Machine électrique suivant la revendication 7,
dans laquelle la machine (1) électrique a une unité (15) rotorique, constituée d'un arbre (8), d'un paquet (9) de tôles rotoriques, d'aimants (9) et de paliers (6).

9. Machine électrique suivant l'une des revendications 1 à 8,
dans laquelle la machine (1) électrique a une enveloppe en acier fin, formée de l'unité (5) d'enveloppe suivant l'une des revendications 1 à 3 et du deuxième flasque (10).

10. Procédé de fabrication d'une machine (1) électrique, notamment d'une machine électrique suivant l'une des revendications 7 à 9, dans lequel on assemble, dans un premier stade (20) de fabrication, un premier flasque (10), un paquet (5) de tôles extérieur et une bride (12) intermédiaire, dans lequel, dans un deuxième stade (21) de fabrication, on revêt le premier flasque (10), le paquet (5) de tôles extérieur et la bride (12) intermédiaire d'un revêtement (16) en acier fin, dans lequel on relie entre eux, en une unité (5) d'enveloppe, le premier flasque (10), le paquet (5) de tôles extérieur et la bride (12) intermédiaire, au moyen d'un procédé de fabrication génératif.

11. Procédé suivant la revendication 8,
dans lequel, dans un troisième stade (22) de fabrication, on insère un paquet (9) de tôles statoriques bobinées dans l'unité (5) d'enveloppe produite dans le deuxième stade (21) de fabrication.

12. Procédé suivant l'une des revendications 10 ou 11,
dans lequel, dans un quatrième stade (23) de fabrication, on insère une unité (15) rotorique, constituée d'un arbre (8), de paliers (6), d'un paquet (9) de tôles rotoriques et d'aimants (7) dans l'unité (13) de moteur produite dans le troisième stade (22) de fabrication.

13. Procédé suivant l'une des revendications 10 à 12,
dans lequel, dans un cinquième stade (23) de fabrication, on fixe un deuxième flasque (11) à l'unité (13) de moteur.

14. Procédé suivant l'une des revendications 10 à 13,
dans lequel on rend lisse l'unité (5) d'enveloppe et/ou l'unité (13) de moteur par usinage avec enlèvement de copeaux et/ou par un procédé d'élétropolissage.

15. Procédé suivant l'une des revendications 11 à 14,
dans lequel on produit, au moyen du procédé de fabrication génératif, pour améliorer encore une évacuation de chaleur, des conduits de refroidissement dans l'unité (5) d'enveloppe, dans la partie du premier (16) et/ou du deuxième (17) revêtement en acier fin.
